Europäisches Patentamt

European Patent Office

Office européen des brevets

(11) Publication number: **0 208 870**
**B1**

(12) **EUROPEAN PATENT SPECIFICATION**

(45) Date of publication of patent specification: **05.12.90**

(51) Int. Cl.⁵: **G 06 F 15/347,** G 06 F 9/38

(21) Application number: **86106710.6**

(22) Date of filing: **21.07.81**

(60) Publication number of the earlier application in accordance with Art. 76 EPC: **0 044 562**

(54) **Vector data processor.**

(30) Priority: **21.07.80 JP 98741/80**

(43) Date of publication of application:
**21.01.87 Bulletin 87/04**

(45) Publication of the grant of the patent:
**05.12.90 Bulletin 90/49**

(84) Designated Contracting States:
**DE FR GB**

(56) References cited:
**FR-A-2 382 051**
**US-A-4 025 771**

(73) Proprietor: **HITACHI, LTD.**
**6, Kanda Surugadai 4-chome**
**Chiyoda-ku, Tokyo 100 (JP)**

(72) Inventor: **Omoda, Koichiro**
**1140, Togawa**
**Hadano-shi Kanagawa-ken (JP)**
Inventor: **Nagashima, Shigeo**
**1-40-27, Koyasu-cho**
**Hachioji-si Tokyo (JP)**
Inventor: **Torii, Shunichi**
**4-815-1, Nishi-koigakubo**
**Kokubunji-shi Tokyo (JP)**

(74) Representative: **Strehl, Schübel-Hopf, Groening**
**Maximilianstrasse 54 Postfach 22 14 55**
**D-8000 München 22 (DE)**

EP 0 208 870 B1

Courier Press, Leamington Spa, England.

## Description

### Background of the invention

This invention relates to a vector data processor in which vector data are processed at high speed, and especially to a vector data processor which has a vector storage device called vector registers which can be designated by program instructions and which are connected to a main storage and an operation unit.

A vector processor according to Prior art is disclosed for example, in United State Patent No. 4,128,880.

According to this prior art, vector registers can hold vector elements which need be transferred from the main storage to an operation unit or vice versa, and usage of vector registers can reduce a time required to provide the vector elements to the operation unit than when the vector elements are provided from the main storage.

Furthermore, as the vector registers are accessible in dependently from each other, plural vector processings which require different vector registers can be performed in parallel.

According to the prior art, however, it is not possible to perform read and write operations in parallel to each vector register.

When a preceding vector processing requires a vector register to write vector elements obtained as a result of execution of the preceding vector processing and a succeeding vector processing requires the same vector register to read the vector elements, it is not possible to start reading of the result vector elements from the vector register at an arbitrary timing. The reading of the result vector elements for the succeeding vector processing needs to be started after completion of writing of the result vector elements by the preceding vector processing. Therefore, the preceding and succeeding vector processings cannot be performed in parallel.

Although the prior art shows that in a chaining mode of operation, the two processings can be performed in parallel, this mode of operation is possible only when the succeeding vector processing is ready to start at a timing when the first one of the result vector elements is written into the vector register.

### Summary of the Invention

The object of this invention is to provide a vector processor which can start reading, from a vector register, result vector elements being written by a preceding vector processing, in parallel to the writing of the result vector elements and from an arbitrary timing before completion of the writing thereof.

In order to accomplish the object, the vector processor according to the present invention includes a read address counter and a write address counter in an address circuit for each vector register, so that a read operation and a write operation are performed in parallel to the same vector register by these address counters.

These and other objects, features and advantages of the present invention will become more apparent from the following specific description of preferred embodiments, when taken in conjunction with the accompanying drawings.

### Brief description of the drawings

Figure 1 is a schematic block diagram of a vector data processor according to this invention;

Figure 2 is a time chart of the operation of the processor in Figure 1.

### Description of the preferred embodiments

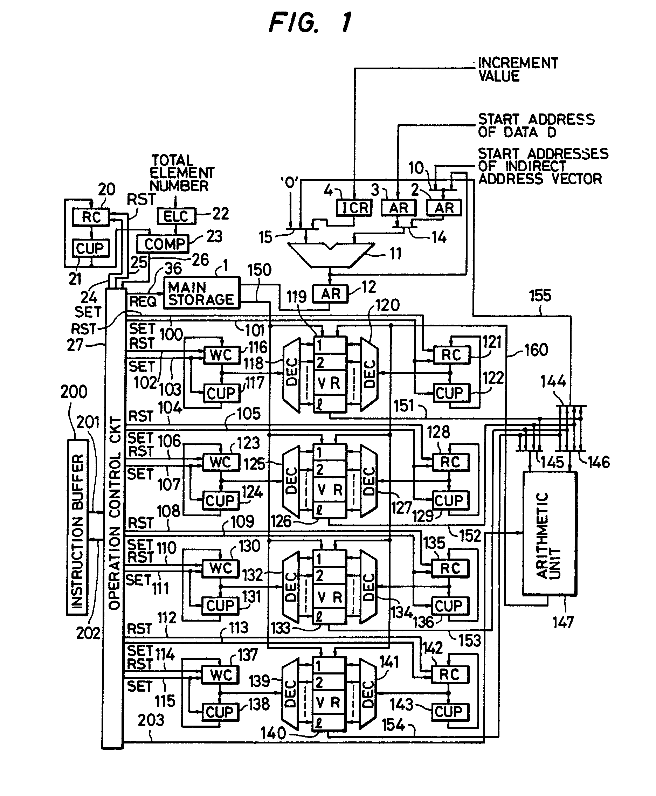

In the figure 1, the system comprises a main storage 1, address registers 2, 3 and 12, an increment register 4, selectors 10, 14 and 15, an address adder 11, an element counter (EC) 20, count-up (+1 addition) circuit (CUPs) 21, an element length register (ELR) 22, a comparator (COMP) 23, a set signal line (SET) 24, a reset signal line (RST) 25, a coincidence signal line 26, an operation control circuit 27, a request signal (REQ) line 36, an instruction buffer 200, an instruction readout line 201, and an instruction end signal line 202. Figure 1 include write address counters 116, 123, 130 and 137, count-up circuits 117, 122, 124, 129, 131, 136, 138 and 143, decoders 118, 120, 125, 127, 132, 134, 139 and 141, vector registers 119, 126 and 133, 140 which can be designated by program instructions, read address counters 121, 128, 135 and 142, reset signal lines 100, 102, 104, 106, 108, 110, 112 and 114, set signal lines 101, 103, 105, 107, 109, 111, 113 and 115, selectors 144—146, an arithmetic unit 147, and an operation instruction signal line 203. The vector registers 119, 126, 133, 140 are constructed of l registers, and can store l items of data therein. The operation control circuit 27 may take the form of a conventional programmed sequence control of the type well known in the art.

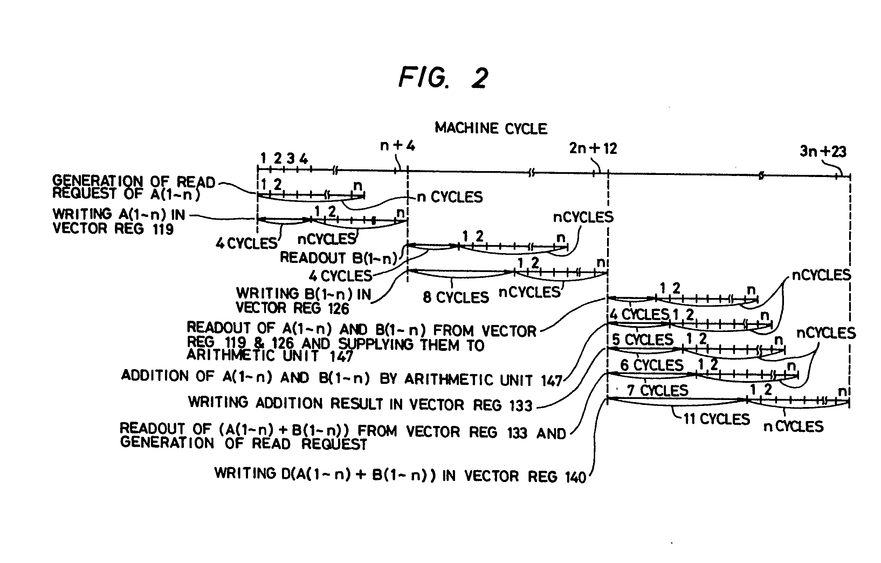

While a case of $n \leqq l$ will be referred to in the following description, data may be divided into processing units each consisting of l data items and then processed in case of $n > l$. A time chart of the present embodiment (the case of $n \geqq l$) is shown in Figure 2.

In the embodiment, a read circuit and a write circuit is provided for each vector register. A write address counter 116, a count-up circuit 117, and a decoder 118 forms a write circuit for the vector register 119. A read address counter 121, a count-up circuit 122 and a decoder 120 forms a read circuit for the same vector register 119. The write address counter 116 sequentially provides write addresses to the decoder 118 by means of the operations of the count-up circuit 117, so as to enable the decoder 118 to write vector elements at address locations designated by the generated write addresses. Similarly, the read address counter 121 sequentially provides read addresses to the decoder 120 by means of the operations of the count-up circuit 117, so as to enable the decoder 120 to read vector elements from the vector register 119. The count-up circuits 117, 122 respond to set signals respectively provided by way of lines 103 and 101 from the operation control circuit 27. Therefore, the write address counter 116 and the read address counter 121 are operable independently from each other so as to simultaneously indicate mutually different address locations in the vector register 119. The same can be said with other vector registers 126, 133, 140.

Read or write operation to these vector registers can be instructed by the operation control circuit 27, after decoding instructions. These vector registers sequentially receive vector elements either read out of the main storage 1 or provided by the operation unit 147. These vector registers also sequentially provide vector elements to the operation unit 147 as operands therefor by way of the selector 145 or 146. The operation unit 147 performs an operation in a pipelined manner on the operands provided from the vector registers. The operation to be performed is designated by the operation control circuit 27 by way of a line 203. The results of the operation are sequentially provided to one of the vector registers 119, 126, 133, 140. Thus, various vector operations can be performed on vector elements stored in the vector registers.

Vector elements held by these vector registers can be sequentially sent to the address adder 11 by way of the selector 144, the line 155 and the selector 15, so as to generate sequentially addresses to access the main storage 1 therewith.

Thus, in this embodiment, there are plural vector processing circuits like the operation unit 147 or the adder 11 each of which sequentially receives and/or provides vector elements. The present invention is not restricted to usage of these kinds of vector processing circuits.

Hereinafter, the operation of the embodiment of Fig. 1 will be explained in connection with vector data fetching from the main storage 1 based upon a sum vector of two indirect address vectors A(1-n) and B(1-n). The indirect address vector element A(i) employed in this embodiment represents an address difference between an element X(i) and the first element X(1) of a vector. Therefore, vector elements of the vector X(1~m) can be selectively indicated by the indirect address vector elements A(1~n). We presume that all vector elements of vectors employed in this embodiment are spaced in the main storage 1 with a predetermined distance from its neighbouring elements of the same vector. The distance is called an address increment.

(1) Reading of A(1-n):

In the beginning, the number n of elements is set in the element length register 22, the increment value is set in the increment register 4, and the address of the head element A(1) is set in the address register 2 through the selector 10.

Subsequently, the operation control circuit 27 loads the instruction for reading out indirect addresses A(1-n) from the main storage 1 and for storing them into the vector register 119, from the instruction buffer 200 through the instruction readout line 201. The operation control circuit 27 decodes the instruction and performs controls necessary for this operation as follows. First, it transmits the reset signals 25 and 102 to clear the element counter 20 and the write counter 116 to zero, respectively. Continuously, it transmits the set signal 24 to increment the value of the element counter 20 by means of the count-up circuit 21. At this time, the output of the count-up circuit 21 is applied to the comparator 23 and is compared with the value of the element length register 22 therein. If, as the result of the comparing operation, both the values are equal, the coincidence signal 26 is transmitted to the operation control circuit 27 and is used for the decision of an end of the operation. The set signal 24 is transmitted in each of n cycles until the coincidence signal 26 is detected, and the request signal 36 is transmitted to the main storage 1 in synchronism with the set signal 24.

The time chart of Figure 2 shows time relations after the read request of A(1) or the first request signal 36 is transmitted. As shown in Figure 2, the request signal 36 is transmitted every cycle in a manner to succeed from element No.I to No.n. Readout addresses are successively formed by the operation control circuit 27 as follows. The address of the first element A(1) is formed by applying the value of the address register 2 and data "0" to the address adder 11 through the selectors 14 and 15, respectively, and adding both the values (in substance, the value itself of the address register 2). The added result is transmitted to the main storage 1 through the address register 12. At this time, the added result is also set in the address register 2 through the selector 10 so as to be used for forming the address of the next element A(2). The address of the second element A(2) is formed in such a way that the value of the address register 2 set by the address calculation of the first element and the value of the increment register 4 are applied to the address adder 11 through the selectors 14 and 15, respectively, and that both the values are added. The added result is transmitted to the main storage 1 through the address register 12, and is simultaneously set in the address register 2 through the selector 10, to be used in case of forming the address of the third element A(3). Thereafter, the addresses are successively formed by similar operations and are pipeline-controlled so as to be transmitted to the main storage every cycle in synchronism with generation of the request signal 36.

Subsequently, the set signal 103, which is a signal delayed by four cycles with respect to the request signal 36 and which indicates a write operation to the vector register 119, is transmitted. Upon the transmission of the set signal 103, the value of the write counter (WC) 116 is applied to the count-up circuit 117 so as to be incremented thereby, and the result is stored in the counter 116. At the same time, the value of the write address counter 116 before the count-up is decoded by the decoder 39, and the indirect address vector A(1-n) read out from the main storage 1 is stored into the corresponding register of the vector register 119 assigned by the decoded result. It is supposed that the readout data from the main storage 1 reaches the vector register 119 in four cycles after the transmission of the request signal 36. As shown in Figure 2, the writing of the indirect address vector A(1-n) into the vector register 119 is started four cycles after the first set signal 103 has been transmitted, that is, after the first request signal 36 has been transmitted. It is executed in each of n cycles.

(2) Reading of B(1-n):

After the end of the above processings, the operation control circuit 27 transmits the instruction end signal 202 to the instruction buffer 200. Continuously, it sets the increment value of the indirect address vector B in the increment register 4 and the start address in the address register 2. Subsequently, the operation control circuit 27 loads from the instruction buffer 200 by way of line 201 an instruction to be processed next, i.e., the instruction of reading out B(1-n) from the main storage 1 and storing them into the vector register 126, and it performs controls necessary for these processings. First, it transmits the reset signals 25 and 106, to clear the element counter 20 and the write address counter 123 to zero, respectively. Subsequently, it transmits the set signal 24, the request signal 36 (synchronous with the set signal 24) and the set signal 107 (with the request signal 36 delayed four cycles) which indicates a writing operation to the vector register 126. The method of forming the readout address synchronous with the request signal 36 is the same as in the case of reading out addresses A(1-n). In synchronism with the set signals 107, addresses B(1-n) read out from the main storage 1 are successively stored into the vector register 126 connected with the main storage 1 through the data line 150. The control in this case is made as in the case of the vector A(1-n) by the use of the write address counter 123, the count-up circuit 124 and the decoder 125. As illustrated in Figure 2, the request signal 36 has its transmission started at the fourth cycle after A(n) has been stored into the vector register 119, and it is transmitted every cycle in a manner to be repeated n times. Addresses B(1-n) are successively stored into the vector register 126 with the delay of four cycles with respect to the request signals 36.

(3) Operation of A(1-n) + B(1-n) and Reading of D(A(1-n) + B(1-n)):

After the end of the processings of item (2), the operation control circuit 27 transmits the instruction end signal 202 to the instruction buffer 200. Subsequently, it sets the start address of D(1-m), i.e., the address of the element D(1) in the address register 3.

At the next step, the operation control circuit 27 loads from the instruction buffer 200 through the instruction readout line 201, the instruction of reading out A(1-n) and B(1-n) from the vector register, 119 and 126, respectively, and adding them in the arithmetic unit 147 and then storing the added result A(1-n) + B(1-n) into the vector register 133, and the instruction of reading, as an indirect address vector, the data A(1-n) + B(1-n) storer in the vector register 133 and then reading out D(A(1-n) + B(1-n)) from the main storage 1 based upon the indirect address vector A(1-n) +B (1-n) and storing this data D(A(1-n) + B(1-n)) into the vector register 140. Thereafter, the operation control circuit 27 performs controls necessary for these processings. First, it transmits the reset signals 25, 100, 104, 110, 108 and 114, to clear the element counter 20, the read address counter 121, the read address counter 128, the write address counter 130, the read address counter 135 and the write address counter 137 to zero, respectively. Continuously, it transmits the set signal 24, to increment the value of the element counter 20 by means of the count-up circuit 21. At this time, the output of the countup circuit 21 is applied to the comparator 23 and is compared with the value of the element length register 22 therein to detect an end of operation, as mentioned before. The set signal 24 is transmitted every cycle in a manner to be repeated n times until the coincidence signal 26 is detected, and the set signal 101 and the set signal 105 for the vector register 119 and 126 are transmitted from the operation control circuit 27 in synchronism with this set signal 24. In addition, the operation instruction signal 203 with the set signal 101 delayed one cycle and the set signal 111 with the same delayed two cycles are transmitted. Upon the transmission of the set signal 101, the values of A(1-n) stored in the vector register 119 are read out and are applied to the arithmetic unit 147 through the line 151 as well as the selector 145. Upon the transmission of the set signal 105, the values of B(1-n) stored in the vector register 126 are read out and are applied to the arithmetic unit 147 through the line 152 as well as the selector 146. In case of reading out A(1-n) from the vector register 119, the control is effected with the read address counter 121, the countup circuit 122 and the decoder 120, while in case of reading out B(1-n) from the vector register 126, the control is effected with the read address counter 128, the countup circuit 129 and the decoder 127. The indirect address vector data A(1-n) and B(1-n) read out from the vector registers 119 and 126 is applied to the arithmetic unit 147, is added in one cycle on the basis of the operation instruction signal 203 instructive of the addition, and the result A(1-n) + B(1-n) is stored into the vector register 133 through the line 160 in one cycle after the operation. The storing of the operated result is made in synchronism with the set signal 111. At this time, the control is effected with the write address counter 130, the countup circuit 131 and the decoder 132. The point of time at which the first elements A(1) and B(1) are respectively read out from the vector registers 119 and 126 is, as illustrated in Figure 2, four cycles after B(n) has been read out from the main storage 1 and stored into the vector register 126 in the processings of the preceding time. Thereafter, A(1-n) and B(1-n) are successively read out in each of n cycles. The operation in the arithmetic unit 147 is performed one cycle after the readout, and the storing of the operated result two cycles after the readout.

Subsequently, the set signal 109 which is a signal with the set signal 101 delayed three cycles, as well as the request signal 36, and the set signal 115 which is a signal with the set signal 101 delayed seven cycles, are transmitted from the operation control circuit 27, so that each of the result vector element A(i) + B(i) is read out after writing thereof and before completion of the writing of all result vector elements. Upon the transmission of the set signal 109, A(1-n) + B(1-n) is read out from the vector register 133 and are transferred to the address adder 11 through the line 153, the selector 144, the line 155 and the selector 15. The other input of the address adder receives the value of the address register 3, these two inputs are added, and the result is transferred to the main storage 1 through the address register 12 as the readout address of D(A(1-n) + B(1-n)). In synchronism with the address transfer, the request signal 36 stated above is transmitted from the operation control circuit 27 to the main storage 1. In the readout of the vector register 133, the control is effected with the read address counter 135, the countup circuit 136 and the decoder 134. The readout data D(A(1-n) + B(1-n)) from the main storage 1 reaches the vector register 140 through the line 150 and is stored therein in four cycles after the transmission of the request signal 36. This storing is controlled with the write address counter 137, the countup circuit 138 and the decoder 139 in synchronism with the set signal 155.

As illustrated in Figure 2, the readout of the indirect address vector A(1-n) + B(1-n) from the vector register 133 and the readout request for the vector data D(A(1-n) + B(1-n)) are started one cycle after A(1) + B(1) delivered from the adder 147 has been stored into the vector register 133. Thus, the vector register 133 reads the written vector elements one cycle after writing of each vector element. Thereafter, they are made every cycle in a manner to succeed n times. The readout data D(A(1-n) + B(1-n) from the main storage 1 is stored in the vector register 140 with a delay of four cycles from the readout request or the transmission of the request signal 36. After the last element D(A(n) + B(n)) has been stored into the vector register 140, the operation control circuit 27 transmits the instruction end signal 202 to the instruction buffer 200, to complete the processings.

In the case where, by way of example, the data D(A(1-n) + B(1-n) stored in the vector register 140 are sequentially transferred to the arithmetic unit 147, the transfer is controlled with the read counter 142 (which is cleared into zero by the reset signal 112 before use as stated before), the countup circuit 143 and the decoder 141, and the data read out in synchronism with the set signals 113. It has been assumed that the readout data from the main storage 1 is stored into the vector register four cycles after the transmission of the request signal 36, but this case is not restrictive. Although, in the present embodiment, the case of reading out the vector data from the main storage based upon the indirect address vector has been described, also a case of writing data into the main storage can be readily realized in the same way.

It is clear from the embodiment that transfer of results vector elements of a preceding vector processing from a vector register as operand vector elements for a succeeding vector processing can be started before completion of the writing of the all result vector elements.

The embodiment shows a case where reading of the result vector elements are started one cycle after start of writing of the result vector elements, but as two address counters are provided for each vector register, we can easily modify the operation control 27 so that the read start timing can have various delays with respect to the write start timing.

Therefore the present invention is suitable to make a vector processor which enable a succeeding vector processing to start at any time before the all result vector elements are written by a preceding vector processing.

**Claims**

1. A vector data processor, comprising:

(a) a main storage (1);

(b) an operation unit (147) for performing an operation on vector elements provided to said operation unit in such a manner as to provide vector elements corresponding to the results of said operation;

(c) a plurality of vector registers (119, 126, 133, 140) operable independently from each other and each connected to said main storage (1) and said operation unit (147) so as to receive vector elements therefrom or to provide vector elements thereto and each for holding a plurality of vector elements at a plurality of address locations at which said vector elements are stored; and

(d) a plurality of address circuits (116 to 118, 120 to 122; 123 to 125, 127 to 129; 130 to 132, 134 to 136; 137 to 139, 141 to 143) each connected to control an access address to a respective one of said vector registers;

characterized in that each address circuit includes:

a write address counter (116; 123; 130; 137) for sequentially indicating addresses of storage locations within the vector register controlled thereby at which a write operation is to be effected for vector elements received by the vector register controlled thereby; and

a read address counter (121; 128; 135; 142) operable simultaneously with said write address counter (116; 123; 130; 137) for sequentially indicating addresses of storage locations at which a read operation is to be effected for vector elements held by the vector register controlled thereby.

2. A vector data processor according to claim 1, characterized by at least one processing circuit (11) connected to said vector registers (119, 126, 133, 140) for sequentially receiving and processing vector elements from said vector registers.

3. A vector data processor according to claim 1 or 2, characterized by an operation control circuit (27) connected to said plurality of write address counters (116, 123, 130, 137) and said plurality of read address counters (121, 128, 135, 142) for enabling one of said write address counter (130) and one of said read address counter (135) connected to a selected vector register (133) so as to perform said write operation and said read operation for the selected vector register (133) in an overlapping manner with said sequential read operation being effected after the start of said sequential write operation.

4. A vector data processor according to claim 3, characterized in that said operation control circuit (27) enables said write address counter (130) and said read address counter (135) to start in response to first and second instructions, respectively.

5. A vector data processor according to claim 3, characterized in that said operation control circuit (27) is operable to control said plurality of write address counters (116, 123, 130, 137) and said plurality of read address counters (121, 128, 135, 142) so as to sequentially read out a set of vector elements from a first selected vector register (119; 126), to sequentially provide the vector elements to said operation unit (147) as operand vector elements, so as to sequentially write into a second selected vector register (133) a set of result vector elements which is a set of vector elements sequentially provided by said operation unit (147) as the results of said operation performed on the set of operand vector elements, so as to sequentially read the result vector elements from said second vector register (133) in an overlapping manner with and after start of the writing of the set of result vector elements into said second vector register (133), and so as to sequentially provide the read out result vector elements to said processing circuit (11).

6. A vector data processor according to claim 4, characterized in that said operation control circuit (27) is operable in response to first instruction, to enable the read address counter (121; 128) connected to a first vector register (119; 126) selected by the first instruction to perform the read operation for the first vector register (119; 126) so as to sequentially provide the read out vector elements to said operation unit (147) as operands therefor, operable, in response to the first instruction, to enable the write address counter (130) connected to a second vector register (133) selected by the first instruction to perform said write operation sequentially for result vector elements provided from said operation unit (147) as the results of the operation thereby for the operands, and operable, in response to a second instruction which selects the second vector register (133), to enable said read address counter (135) connected to said second vector register (133) to perform the read operation for the result vector elements stored in the second vector register (133), so as to provide the read out result vector elements to said processing circuit (11), wherein said reading of the set of result vector elements from the second vector register (133) for the second instruction is initiated in an overlapping manner with and after start of the writing of the result vector elements into the second vector register (133).

7. A vector data processor according to claim 5, characterized in that said processing circuit (11) includes an adder means for sequentially performing an arithmetic operation on each of the result vector elements read out from said second vector register (133) and sequentially generating a set of addresses for a set of vector elements stored in said main storage (1) as the results of said addition.

**Patentansprüche**

1. Vektordatenprozessor, umfassend
(a) einen Hauptspeicher (1),
(b) eine Operationseinheit (147) zur Durchführung einer Operation an ihr zugeführten Vektorelementen derart, daß dem Ergebnis der Operation entsprechende Vektorelemente erzeugt werden,
(c) mehrere unabhängig voneinander arbeitende Vektorregister (119, 126, 133, 140), deren jedes mit dem Hauptspeicher (1) und der Operationseinheit (147) verbunden ist, um Vektorelemente daraus zu entnehmen bzw. dorthin zuzuführen, und deren jedes zur Aufnahme mehrerer Vektorelemente an mehreren Adressenstellen dient, an denen die Vektorelemente gepeichert werden, und
(d) mehrere Adressenschaltungen (116 bis 118, 120 bis 122; 123 bis 125, 127 bis 129; 130 bis 132, 134 bis 136; 137 bis 139, 141 bis 143), deren jede zur Steuerung einer Zugriffsadresse zu jeweils einem der Vektorregister geschaltet ist,
dadurch gekennzeichnet, daß jede Adressenschaltung umfaßt.
einen Schreibadressenzähler (116; 123; 130; 137), der innerhalb des von ihm gesteuerten Vektorregisters sequentiell Adressen von Speicherstellen angibt, an denen eine Schreiboperation für Vektorelemente durchgeführt werden soll, die aus dem von ihm gesteuerten Vektorregister erhalten werden, und
eine Leseadressenzähler (121; 128; 135; 142), der simultan mit dem Schreibadressenzähler (116; 123; 130; 137) arbeitet und sequentiell Adressen von Speicherstellen angibt, an denen eine Leseoperation für Vektorelemente durchgeführt werden soll, die in dem von ihm gesteuerten Vektorregister enthalten sind.

2. Vektordatenprozessor nach Anspruch 1, gekennzeichnet durch mindestens eine Verarbeitungsschaltung (11), die mit den Vektorregistern (119, 126, 133, 140) verbunden ist, um Vektorelemente von diesen sequentiell zu empfangen und zu verarbeiten.

3. Vektordatenprozessor nach Anspruch 1 oder 2, gekennzeichnet durch eine mit den mehreren Schreibadressenzählern (116, 123, 130, 137) und den mehreren Leseadressenzählern (121, 128, 135, 142) verbundene Operations-Steuerschaltung (27), die einen mit einem ausgewählten Vektorregister (133) verbundenen Schreibadressenzähler (130) und einen mit demselben ausgewählten Vektorregister (133) verbundenen Leseadressenzähler (135) ansteuert, um die Schreib- und die Leseoperation für das ausgewählte Vektorregister (133) überlappend durchzuführen, wobei die sequentielle Leseoperation nach dem Start der sequentiellen Schreiboperation ausgeführt wird.

4. Vektordatenprozessor nach Anspruch 3, dadurch gekennzeichnet, daß die Operations-Steuerschaltung (27) den Schreibadressenzähler (130) und den Leseadressenzähler (135) zum Start gemäß einem ersten bzw. einem zweiten Befehl ansteuert.

5. Vektordatenprozessor nach Anspruch 3, dadurch gekennzeichnet, daß die Operations-Steuerschaltung (27) so betätigbar ist, daß sie die mehreren Schreibadressenzähler (116, 123, 130, 137) und die mehreren Leseadressenzähler (121, 128, 135, 142) derart steuert, daß ein Satz von Vektorelementen aus einem ersten ausgewählten Vektorregister (119; 126) sequentiell ausgelesen wird, daß die Vektorelemente der Operationseinheit (147) als Operanden-Vektorelemente sequentiell zugeführt werden, daß in ein zweites ausgewähltes Vektorregister (133) ein Satz von Ergebnis-Vektorelementen sequentiell eingeschrieben wird, bei dem es sich um einen Satz von Vektorelementen handelt, der als Ergebnis der an dem Satz von Operanden-Vektorelementen durchgeführten Operation von der Operationseinheit (147) sequentiell zugeführt wird, daß die Ergebnis-Vektorelemente aus dem zweiten Vektorregister (133) überlappend mit und nach dem Start des Einschreibens des Satzes von Ergebnis-Vektorelementen in das zweite Vektorregister (133) sequentiell ausgelesen werden, und daß die ausgelesenen Ergebnis-Vektorelemente der Verarbeitungsschaltung (11) sequentiell zugeführt werden.

6. Vektordatenprozessor nach Anspruch 4, dadurch gekennzeichnet, daß die Operations-Steuerschaltung (27) gemäß einem ersten Befehl so betätigbar ist, daß sie den Leseadressenzähler (121; 128), der mit einem von dem ersten Befehl ausgewählten ersten Vektorregister (119; 126) verbunden ist, zur Durchführung der Leseoperation für das erste Vektorregister (119; 126) ansteuert, um die ausgelesenen Vektorelemente der Operationseinheit (147) als Operanden dafür sequentiell zuzuführen, ferner gemäß dem ersten Befehl so betätigbar ist, daß sie den Schreibadressenzähler (130), der mit einem von dem ersten Befehl ausgewählten zweiten Vektorregister (133) verbunden ist, ansteuert, um die Schreiboperation für Ergebnis-Vektorelemente sequentiell durchzuführen, die von der Operationseinheit (147) als Ergebnis von deren Operation für die Operanden erzeugt werden, und gemäß einem das zweite Vektorregister (133) auswählenden zweiten Befehl so betätigbar ist, daß sie den mit dem zweiten Vektorregister (133) verbundenen Leseadressenzähler (135) zur Durchführung der Leseoperation für die in dem zweiten Vektorregister (133) gespeicherten Vektorelemente ansteuert, um die ausgelesenen Ergebnis-Vektorelemente der Verarbeitungsschaltung (11) zuzuführen, wobei das Auslesen des Satzes von Ergebnis-Vektorelementen aus dem zweiten Vektorregister (133) für den zweiten Befehl überlappend mit und nach dem Start des Einschreibens der Ergebnis-Vektorelemente in das zweite Vektorregister (133) eingeleitet wird.

7. Vektordatenprozessor nach Anspruch 5, dadurch gekennzeichnet, daß die Verarbeitungsschaltung (11) eine Addiereinrichtung umfaßt, um an jedem der aus dem zweiten Vektorregister (133) ausgelesenen Vektorelemente sequentiell eine arithmetische Operation durchzuführen und als Ergebnis der Addition sequentiell einen Satz von Adressen für einen Satz von in dem Hauptspeicher (1) gespeicherten Vektorelementen zu erzeugen.

**Revendications**

1. Processeur de données vectorielles, comportant:

(a) une mémoire principale (1);

(b) une unité d'opération (147) pour effectuer une opération sur des éléments vectoriels délivrés à ladite unité d'opération de manière à délivrer des éléments vectoriels correspondants aux résultats de ladite opération;

(c) une pluralité de registres vectoriels (119, 126, 133, 140) actionnables indépendamment les uns des autres et connectés chacun à ladite mémoire principale (1) et à ladite unité d'opération (147) de manière à en recevoir des éléments vectoriels ou à y délivrer des éléments vectoriels et chacun pour conserver une pluralité d'éléments vectoriels à une pluralité d'emplacements d'adresse auxquels lesdits éléments vectoriels sont mémorisés; et

(d) une pluralité de circuits d'adresse (116 à 118, 120 à 122; 123 à 125, 127 à 129; 130 à 132, 134 à 136; 137 à 139, 141 à 143) connectés chacun pour commander une adresse d'accès à l'un respectif desdits registres vectoriels;

caractérisé en ce que chaque circuit d'adresse comprend:

un compteur d'adresse d'écriture (116; 123; 130; 137) pour indiquer séquentiellement des adresses d'emplacements de mémoire à l'intérieur du registre vectoriel ainsi commandé auxquels une opération d'écriture doit être effectuée pour des éléments vectoriels reçus par le registre vectoriel ainsi commandé; et

un compteur d'adresse de lecture (121; 128; 135; 142) actionnable simultanément avec ledit compteur d'adresse d'écriture (116; 123; 130; 137) pour indiquer séquentiellement des adresses d'emplacements de mémoire auxquels une opération de lecture doit être effectuée pour des éléments vectoriels conservés par le registre vectoriel ainsi commandé.

2. Processeur de données vectorielles selon la revendication 1, caractérisé par au moins un circuit de traitement (11) connecté auxdits registres vectoriels (119, 126, 133, 140) pour recevoir séquentiellement et traiter des éléments vectoriels provenant desdits registres vectoriels.

3. Processeur de données vectorielles selon la revendication 1 ou 2, caractérisé par un circuit de commande d'opération (27) connecté à ladite pluralité de compteurs d'adresse d'écriture (116, 123, 130, 137) et à ladite pluralité de compteurs d'adresse de lecture (121, 128, 135, 142) pour déclencher l'un desdits compteurs d'adresse d'écriture (130) et l'un desdits compteurs d'adresse de lecture (135) connectés à un registre vectoriel sélectionné (133) de manière à effectuer ladite opération d'écriture et ladite opération de lecture pour le registre vectoriel sélectionné (133) par chevauchement avec ladite opération de lecture séquentielle effectuée après le début de ladite opération d'écriture séquentielle.

4. Processeur de données vectorielles selon la revendication 3, caractérisé en ce que ledit circuit de commande d'opération (27) déclenche ledit compteur d'adresse d'écriture (130) et ledit compteur d'adresse de lecture (135) pour démarrer en réponse à des première et seconde instructions, respectivement.

5. Processeur de données vectorielles selon la revendication 3, caractérisé en ce que ledit circuit de commande d'opération (27) est actionnable pour commander ladite pluralité de compteurs d'adresse d'écriture (116, 123, 130, 137) et ladite pluralité de compteurs d'adresse de lecture (121, 128, 135, 142) de maniere a lire sequentiellement un jeu d'éléments vectoriels provenant d'un premier registre vectoriel sélectionné (119; 126), pour délivrer séquentiellement les éléments vectoriels à ladite unité d'opération (147) en tant qu'éléments vectoriels opérandes, de manière à écrire séquentiellement dans un second registre vectoriel sélectionné (133) un jeu d'éléments vectoriels résultants qui est un jeu d'éléments vectoriels séquentiellement délivrés par ladite unité d'opération (147) en tant que résultats de ladite opération effectuée sur le jeu d'éléments vectoriels opérandes, de manière à lire séquentiellement les éléments vectoriels résultants provenant dudit second registre vectoriel (133) par chevauchement avec et après le début de l'écriture du jeu d'éléments vectoriels résultants dans ledit second registre vectoriel (133), et de manière à délivrer séquentiellement les éléments vectoriels résultants lus audit circuit de traitement (11).

6. Processeur de données vectorielles selon la revendication 4, caractérisé en ce que ledit circuit de commande d'opération (27) est actionnable, en réponse à une première instruction, pour déclencher le registre d'adresse de lecture (121; 128) relié à un premier registre vectoriel (119; 126) sélectionné par la première instruction pour effectuer l'opération de lecture pour le premier registre vectoriel (119; 126) de manière à délivrer séquentiellement les éléments vectoriels lus à ladite unité d'opération (147) en tant qu'opérandes à cet effet, actionnable en réponse à la première instruction, pour déclencher le compteur d'adresse d'écriture (130) connecté à un second registre vectoriel (133) sélectionné par la première instruction pour effectuer ladite opération d'écriture séquentiellement pour des éléments vectoriels résultants délivrés par ladite unité d'opération (147) en tant que résultats de l'opération pour les opérandes, et actionnable, en réponse à une seconde instruction qui sélectionne le second registre vectoriel (133), pour déclencher ledit compteur d'adresse de lecture (135) connecté audit second registre vectoriel (133) pour effectuer l'opération de lecture pour les éléments vectoriels résultants mémorisés dans le second registre vectoriel (133), de manière à délivrer les éléments vectoriels résultants lus audit circuit de traitement (11), dans lequel ladite lecture du jeu d'éléments vectoriels résultants provenant du second registre vectoriel (133) pour la seconde instruction est déclenchée simultanément à et après le départ de l'écriture des éléments vectoriels résultants dans le second registre vectoriel (133).

7. Processeur de données vectorielles selon la revendication 5, caractérisé en ce que ledit circuit de traitement (11) comprend un additionneur pour effectuer séquentiellement une opération arithmétique sur chacun des éléments vectoriels résultants lus dudit second registre vectoriel (133) et générer séquentiellement un jeu d'adresses pour un jeu d'éléments vectoriels mémorisés dans ladite mémoire principale (1) en tant que résultats de ladite addition.

## FIG. 1

# FIG. 2

MACHINE CYCLE